# EUROPÄISCHE PATENTSCHRIFT

(11) **EP 0 650 134 B1**
(45) Veröffentlichungstag und Bekanntmachung des Hinweises auf die Patenterteilung: **04.08.1999**
(21) Anmeldenummer: 94115763.8
(22) Anmeldetag: 06.10.1994
(51) Int. Cl.: G06K 7/10

(54) **Barcodeleser und Verfahren zu seinem Betrieb**
Bar code reader and method of use
Lecteur de codes à barres et méthode d'utilisation

(30) Priorität: 22.10.1993 DE 4336137
(43) Veröffentlichungstag der Anmeldung: 26.04.1995
(73) Patentinhaber: SICK AG, 79183 Waldkirch (DE)
(72) Erfinder: Hippenmeyer, Dr. Heinrich, D-79348 Freiamt (DE); Kilian, Reinhold, D-79183 Waldkirch (DE)
(74) Vertreter: Manitz, Finsterwald & Partner

(56) Entgegenhaltungen:
- EP-A- 0 492 410
- FR-A- 2 594 982
- US-A- 4 967 074

## Beschreibung

Die Erfindung betrifft ein Verfahren zum Betreiben eines Barcodelesers nach dem Oberbegriff des Anspruches 1 und einen Barcodeleser nach dem Oberbegriff des Anspruches 4.

Barcodeleser dieser Art werden bei der Beförderung von Stückgut, z.B. beim Fördern von Paketen oder Gepackstücken auf einem Förderband, verwendet, um auf dem Fördergut angebrachte Barcodierungen erkennen und dementsprechend das Fördergut weiterverarbeiten zu können. Derartige Barcodeleser werden im allgemeinen neben der Bewegungsbahn des Förderguts angeordnet, und es besteht kein Problem, die Seitenflächen oder die obere Fläche eines geförderten Gegenstandes mit einem Scanner abzutasten.

Aufgrund der heute üblichen Fördertechnik kann jedoch in vielen Fällen, insbesondere wenn mehrere Codierungen am Objekt angebracht sind, nicht sichergestellt werden, daß die Codierungen auf der Oberseite oder der linken und rechten Seite des Objektes erkannt werden. Daher müssen Codierungen auch erkannt werden, wenn sie auf der Front- und/oder Rückseite der geförderten Gegenstände angebracht sind.

Barcodeleser gemäß der Erfindung erteilen einem auf die Abtastfläche des Gegenstandes gerichteten Abtastlichtstrahl eine doppelte Abtastbewegung in senkrecht aufeinander stehenden Richtungen, derart, daß zunächst ein mit hoher Frequenz von z.B. 1 KHz entlang einer Abtastlinie geführter Abtastlichtstrahl einen linienförmigen Bereich auf der Abtastfläche erfaßt und daß die so gebildete Abtastlinie langsam, d.h. zum Beispiel innerhalb von 0,1 bis 2 Sekunden in senkrecht zur Abtastlinie liegender Richtung über die Abtastfläche derart vorgeschoben wird, daß jeder Punkt der Abtastfläche zumindest einmal vom Abtastlichtstrahl erfaßt wird.

Sofern nun erfindungsgemäß der Abtastlichtstrahl schräg von vorne oder schräg von hinten auf die Front- und/oder Rück-Abtastfläche fällt, ändert sich während des Abtastvorganges der Abstand zwischen Scanner und Abtastfläche. Der auf die Abtastfläche fokussierte Abtastlichtstrahl muß also eine ausreichende Tiefenschärfe aufweisen, damit auch bei sich ändernden Tastabständen stets eine ausreichende Schärfe des Abtastlichflecks auf der Abtastfläche gegeben ist. Die Erzeugung eines Abtastlichtstrahls mit großer Tiefenschärfe erfordert jedoch einen hohen optischen Aufwand, der außerdem mit einem vergleichsweise voluminösen Aufbau des Scanners verknüpft ist.

Das Ziel der vorliegenden Erfindung besteht darin, einen weiteren Barcodeleser und ein weiteres Verfahren zu seinem Betrieb zu schaffen. Insbesondere soll das Problem der Tiefenschärfe eines solchen Barcodelesers bei Abtastung der vorderen und/oder hinteren Abtastfläche eines bewegten Gegenstandes auf wenig aufwendige Weise gelöst werden.

Zur Lösung dieser Aufgabe sind die Merkmale der kennzeichnenden Teile der Ansprüche 1 oder 5 vorgesehen.

Der Erfindungsgedanke besteht also darin, daß die Bewegungsgeschwindigkeit des die Gegenstände tragenden Förderers und die Vorschubgeschwindigkeit der Abtastlinie bzw. der Abtastfläche, insbesondere des Abtastsektors, so aufeinander abgestimmt werden, daß die Abtastlinie sich in jeder Phase des Abtastvorganges zumindest im wesentlichen im gleichen Abstand vom Scanner befindet. Auf diese Weise kann auf einen Scanner mit großer Tiefenschärfe verzichtet werden, so daß ein Scanner von einfachem optischen Aufbau für die Zwecke der Erfindung ausreichend ist. Die Synchronisierung von Fördergeschwindigkeit und Vorschubgeschwindigkeit der Abtastlinie läßt sich auf einfache Weise durch Erfassung der vorderen bzw. hinteren Abtastfläche des Gegenstandes und die Steuerung des Abtastlinienvorschubes in Abhängigkeit von der Bewegungsgeschwindigkeit des Gegenstandes realisieren.

Vorteilhafte Ausführungsformen der Erfindung sind durch die Unteransprüche gekennzeichnet.

Die Erfindung wird im folgenden beispielsweise anhand der Zeichnung beschrieben; in dieser zeigt
- Fig. 1: eine schematische perspektivische Ansicht einer Fördervorrichtung mit darauf angeordnetem Gegenstand und einem erfindungsgemäßen Barcodeleser, wobei die vordere Fläche des Gegenstandes abgetastet wird,
- Fig. 2: eine Seitenansicht eines beim erfindungsgemäßen Barcodeleser verwendeten Scanners in einer rein schematischen, nicht maßstabsgetreuen Darstellung,
- Fig. 3: eine schematische Ansicht des Scanners nach Linie III-III in Fig. 2,
- Fig. 4: eine zu Fig. 1 analoge perspektivische Ansicht, wobei jedoch die Förderrichtung umgekehrt ist und die hintere Fläche der Gegenstände abgetastet wird,
- Fig. 5: eine zu Fig. 1 ähnliche Ansicht, bei der der Scanner so angeordnet ist, daß die Abtastung in einer Richtung senkrecht zur Abtastrichtung nach Fig. 1 liegenden Richtung erfolgt und
- Fig. 6: eine zu Fig. 4 ähnliche Ansicht mit zur Abtastrichtung nach Fig. 4 senkrechter Richtung der hinteren Fläche von Gegenständen.

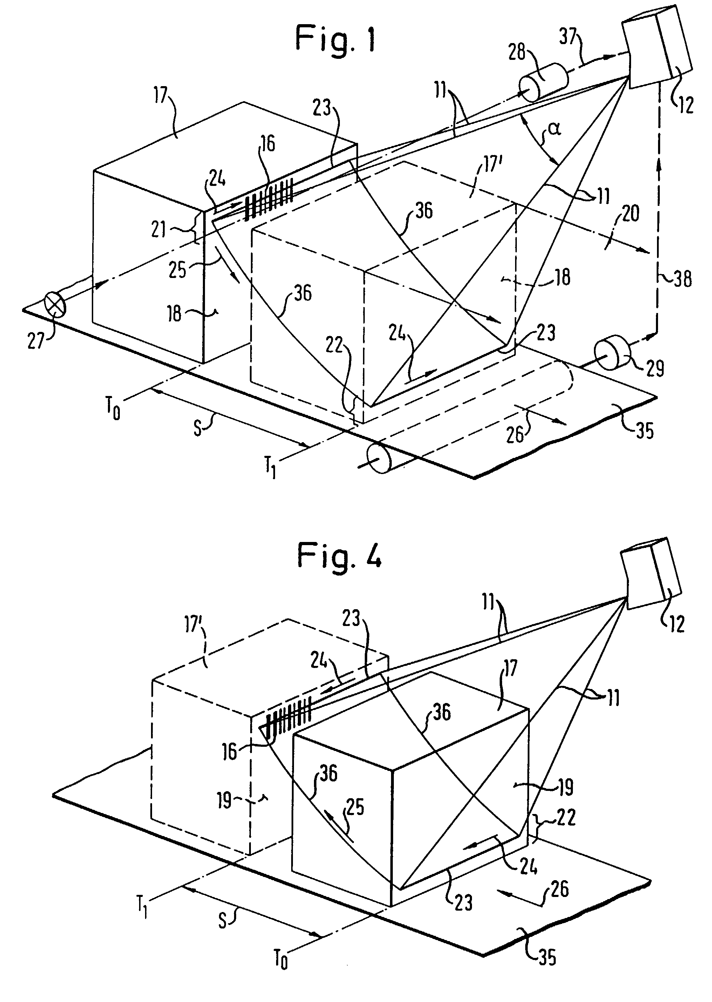

Nach Fig. 1 ist auf einem Förderband 35 ein Gegenstand 17 angeordnet, um von der in ausgezogenen Linien wiedergegebenen Position in einer Bewegungsrichtung 26 gefördert zu werden. Bei 17' ist der gleiche Gegenstand nach dem Vorschub um eine Strecke S ein zweites Mal wiedergegeben.

Auf der vorderen Fläche 18 des Gegenstandes 17 befindet sich im oberen Bereich ein beispielsweise aufgeklebter Barcode, welcher eine Information enthält, die für beispielsweise eine spätere Sortierung der Gegenstände 17 wichtig ist. Es kann sich z.B. eine Information über den Bestimmungsort eines aufgegebenen Packstückes handeln. Damit das Packstück 17 später richtig sortiert werden kann, muß von der Sortierstelle die im Barcode 16 enthaltene Ortsinformation gelesen und erkannt werden.

Zu diesem Zweck ist vor der Lesestrecke S oberhalb der Bewegungsbahn 20 der Gegenstände 17 ein vorzugsweise mit einem Laser bestückter Scanner 12 angeordnet, welcher einen Abtastlichtstrahl 11 in Richtung auf die vordere Fläche 18 aussendet.

Der Abtastlichtstrahl 11 führt in Richtung des Pfeiles 24 eine Abtastbewegung mit einer Frequenz von z.B. 1 KHz aus und erzeugt dabei durch den über die vordere Fläche 18 laufenden Abtastlichtfleck eine Abtastlinie 23. Zusätzlich wird der Abtastlichtstrahl 11 aber mit einer wesentlich geringeren Frequenz von z.B. 0,1 bis 2 Hz in Richtung des Pfeiles 25 nach unten abgelenkt, derart, daß die Abtastlinie 23 entlang der Kreiszylinderfläche 36 mit Mittelpunkt im Scanner 12 nach unten in Richtung des Förderbandes 35 verschwenkt wird.

Am Beginn der Lesestrecke S ist oberhalb des Förderbandes 35 eine aus einer Lichtquelle 27 und einem Lichtempfänger bestehende Lichtschranke 28 vorgesehen, welche dem Scanner 12 über eine Steuerleitung 37 mitteilt, sobald die vordere Fläche 18 eines Gegenstandes 17 zum Zeitpunkt T₀ in die Lesestrecke S eintritt.

Am Förderband 35 ist außerdem ein Inkrementalgeber 29 vorgesehen, der über eine weitere Steuerleitung 38 ein für die Bewegungsgeschwindigkeit 26 des Förderbandes 35 representatives Signal an den Scanner 12 abgibt.

Das erfindungsgemäße Verfahren besteht nun darin, daß, nachdem die Lichtschranke 27, 28 das Eintreten der Vorderfläche 18 des Gegenstandes 17 in die Lesestrecke S erkennt, der Laserscanner 12 über die Steuerleitung 37 so angesteuert wird, daß die Abtastlinie 23 sich zunächst im oberen Bereich 21 nahe der vorderen Oberkante des Gegenstandes 17 befindet. Mit zunehmendem Vorschub des Gegenstandes 17 in Richtung des Pfeiles 26 schwenkt dann die Abtastlinie 23 gesteuert vom Inkrementalgeber 29 über die Steuerleitung 38 entlang der Kreiszylinderfläche 36 nach unten, bis sie zum Zeitpunkt T1, zu welchem die Abtastfläche 18 das hintere Ende der Lesestrecke S erreicht hat, den unteren Bereich 22 im Bereich der vorderen Unterkante des Gegenstandes 17 erreicht hat. Dieser Zustand ist in Fig. 1 in gestrichelten Linien bei 17' angedeutet.

Erfindungsgemäß ist die Länge der Lesestrecke S nun so gewählt, daß die Abtastlinie 23 in jeder Bewegungsphase des Gegenstandes 17 innerhalb der Lesestrecke S sich im wesentlichen im gleichen Abstand vom Zentrum des Abtastlichtstrahles 11 im Inneren des Scanners 12 befindet. Der auf der Abtastlinie 23 befindliche Abtastlichtfleck, der am Beginn der Lesestrecke S im oberen Bereich 21 des Gegenstandes 17 scharf abgebildet ist, bleibt also während der gesamten Vorschubbewegung in Richtung des Pfeiles 25 nach unten selbst dann scharf, wenn die Tiefenschärfe der Abbildung des Abtastlichtflecks minimal ist. Mit anderen Worten wird erfindungsgemäß durch geeignete Wahl der Länge der Lesestrecke S sowie der Vorschubgeschwindigkeit der Abtastlinie 23 in Richtung des Pfeiles 25 dafür gesorgt, daß der Abstand des Abtastlichtstrahls 11 vom Zentrum der Abtastbewegung innerhalb des Laserscanners 12 bis zur vorderen Fläche 18 des bewegten Gegenstandes 17 zumindest im wesentlichen konstant bleibt.

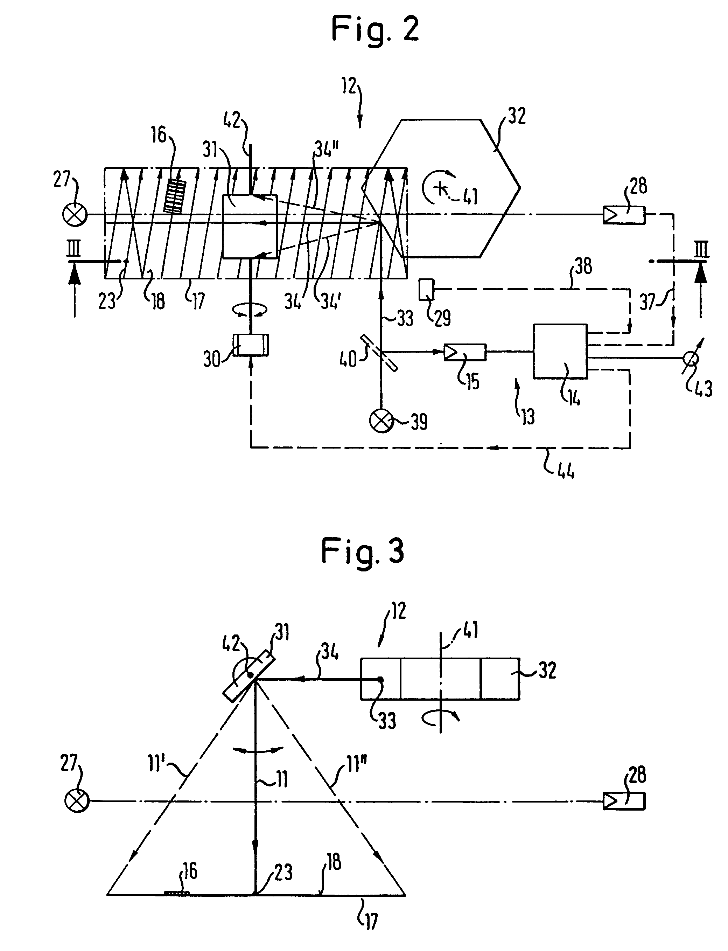

Eine praktische Ausführungsform des Scanners 12 nach Fig. 1 ist in den Fig. 2 und 3 schematisch dargestellt.

Ein beispielsweise von einem Laser 39 über eine nicht dargestellte Optik erzeugter scharf gebündelter Lichtstrahl 33 verläuft durch einen halb durchlässigen Spiegel 40 zu einem Spiegelrad 32, das um eine Achse 41 zu einer kontinuierlichen Drehbewegung in Richtung des Pfeiles angetrieben ist. Der Lichtstrahl 33 wird an einer der Facetten des Spiegelrades um beispielsweise 90° abgelenkt, um als reflektierter Lichtstrahl 34 auf einen länglichen Schwingspiegel 31 zu gelangen, dessen Länge so groß ist, daß der gesamte durch zwei gestrichelte Linien 34', 34'' begrenzte Abtastbereich des reflektierten Lichtstrahls 34 erfaßt wird.

Der Schwingspiegel 31 lenkt den reflektierten Lichtstrahl 34 abermals um, und zwar in Richtung auf die vordere Abtastfläche 18 des Gegenstandes 17, wo der Barcode 16 angebracht ist.

Ein Antrieb 30 erteilt dem Schwingspiegel 31 eine Hin- und Herbewegung um eine in Richtung seiner Längsachse verlaufende Schwenkachse 42 in Richtung des Doppelpfeiles. Hierdurch wird der vom Schwingspiegel 31 zur vorderen Fläche 18 geworfene Abtastlichtstrahl 11 in einem in Fig. 3 gestrichelt angedeuteten Winkelbereich von 11' bis 11'' hin- und hergeschwenkt.

Das von der vorderen Fläche 18 des Gegenstandes 17 reflektierte Licht wird z. B. in Autokollimation über den Schwingspiegel 31 und das Spiegelrad 32 zum teildurchlässigen Spiegel 40 zurückgeworfen und von diesem auf einen Photoempfänger 15 umgelenkt, der an eine Auswerte- und Steuerelektronik 14 angeschlossen ist. Der Photoempfänger 15 und die Auswerte- und Steuerelektronik 14 bilden gemeinsam eine Signalverarbeitungsanordnung 13, die den Inhalt des Barcodes 16 erkennen und an eine nur schematisch bei 43 angeordnete Vorrichtung abgibt.

Der Auswerte- und Steuerelektronik 14 wird auch über die Steuerleitung 37 das Ausgangssignal der Lichtschranke 27, 28 und über die Steuerleitung 38 das Ausgangssignal des Inkrementalgebers 29 zugeführt. Über eine Steuerleitung 44 beaufschlagt die Auswerte- und Steuerelektronik 14 die Antriebseinheit 30 des Schwingspiegels 31.

Sofern die Vorschubgeschwindigkeit des Förderbandes 35 konstant ist, kann auf den Inkrementalgeber 29 verzichtet werden und stattdessen ein der bekannten Vorschubgeschwindigkeit entsprechender Festwert in die Auswerte- und Steuerelektronik 14 eingegeben werden.

Aufgrund dieser Ausbildung beginnt der Schwingspiegel 31 seine den Vorschub der Abtastlinie 23 entlang der Kreiszylinderfläche 36 bewirkende Bewegung im Bereich 21 des Gegenstandes 17 (Fig. 1), sobald die Lichtschranke 27, 28 das Eintreten der vorderen Fläche 18 in die Lesestrecke S erkannt hat. Über den Inkrementalgeber 29 wird dann die Auswerte- und Steuerelektronik 14 veranlaßt, den Antrieb 30 des Schwingspiegels 31 über die Steuerleitung 44 so anzutreiben, daß die Entfernung des Abtastlichtstrahls 11 von der vorderen Fläche 18 während des Vorschubes in Richtung des Pfeiles 25 im wesentlichen konstant bleibt. Auf diese Weise empfängt der Photoempfänger 15 wegen des bei der Abtastung gleich scharf bleibenden Abtastlichtflecks ein einwandfreies Barcode-Signal, welches dann in der angeschlossenen Auswerte- und Steuerelektronik 14 sicher ausgewertet und erkannt werden kann.

Wesentlich für eine sichere Erkennung von auf der vorderen Fläche 18 angeordnete Codes ist es außerdem, daß der in Fig. 1 eingezeichnete Winkel α, um den die Abtastlinie 23 nach unten geschwenkt wird, so groß ist, daß der Schwenkbereich vom oberen Bereich 21 zum unteren Bereich 22 der vorderen Fläche 18 reicht.

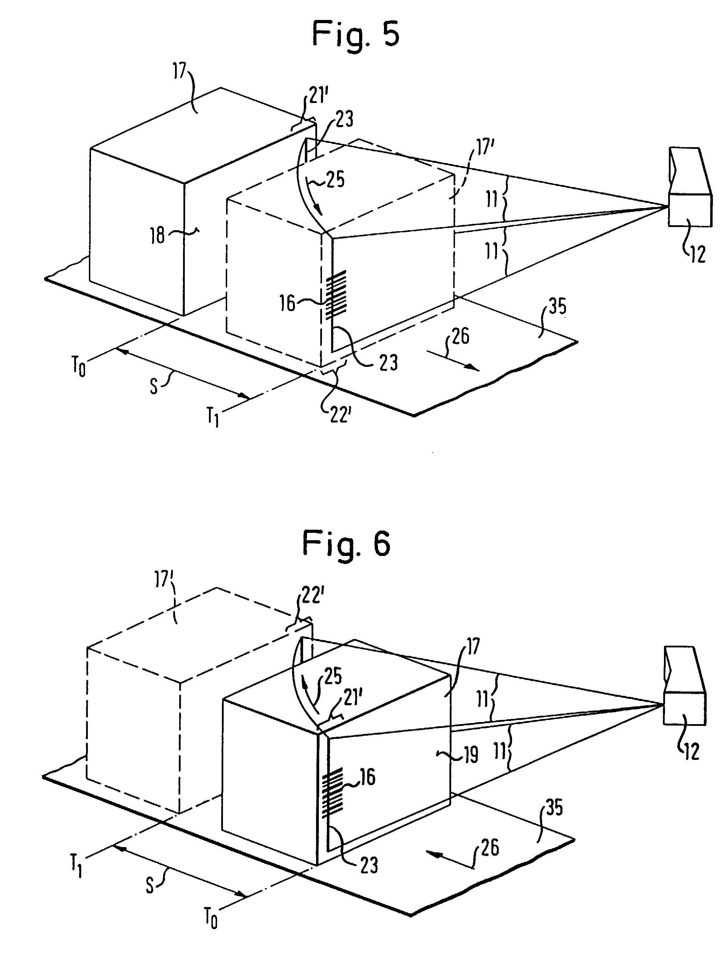

In den Fig. 4 bis 6 bezeichnen gleiche Bezugszahlen entsprechende Teile wie in den Fig. 1 und 2. In den Fig. 4 bis 6 sind jedoch nicht alle Bauelemente, die in Fig. 1 wiedergegeben sind, gezeigt; sie sind jedoch in gleicher Weise wie beim Ausführungsbeispiel nach Fig. 1 vorhanden.

Beim Ausführungsbeispiel nach Fig. 4 ist die Bewegungsrichtung 26 des Förderbandes 35 umgekehrt, derart, daß der Scanner 12 nunmehr die hintere Fläche 19 des Gegenstandes 17 abtastet. Bei einer derartigen Abtastung wird die Abtastlinie 23 zum Zeitpunkt T₀ am Beginn der Lesestrecke S nach unten gelegt und schwenkt dann in Richtung des Pfeiles 25 mit einer erfindungsgemäß vorbestimmten Geschwindigkeit entlang der Kreiszylinderfläche 36 nach oben.

Im übrigen ist die Arbeitsweise der Ausführungsform nach Fig. 4 die gleiche wie die nach Fig. 1.

Beim Ausführungsbeispiel nach Fig. 5 ist die Bewegungsrichtung 26 der Gegenstände wieder die gleiche wie in Fig. 1. Auch wird hier wieder die Vorderfläche 18 der Gegenstände 17 abgetastet, wobei jedoch die Abtastlinie 23 nunmehr senkrecht auf der Richtung der Abtastlinie 23 nach Fig. 1 steht und demzufolge die Vorschubrichtung 25 für die Abtastlinie 23 in seitlicher Richtung erfolgt. Der Bereich 21', wo die Abtastung beginnt, befindet sich also in Förderrichtung gesehen am linken vorderen Rand der Gegenstände 17, während der Endbereich 22' der Abtastung sich im Bereich der vorderen rechten Kante der Gegenstände befindet.

Besonders bevorzugt ist es, wenn die beiden Abtastungen nach Fig. 1 und 5 kombiniert werden, weil auf diese Weise in beliebiger Richtung angeordnete Barcodes 16 sicher erkannt werden können.

Die Ausführungsform nach Fig. 6 entspricht weitgehend der nach Fig. 4, wobei jedoch analog Fig. 5 wieder eine seitliche Vorschubbewegung der Abtastlinie 23 von einem Anfangsbereich 21' an der hinteren linken Kante des Gegenstandes 17 zu einem Bereich 22' an der hinteren rechten Kante des Gegenstandes 17 erfolgt.

Zur Erfassung beliebig ausgerichteter Barcodes 16 werden die senkrecht aufeinander stehenden Abtastungen nach den Fig. 4 und 6 bevorzugt kombiniert angewendet. Es ist auch möglich, je nach Form und Anbringung des Barcodes 16 mehrere z. B. drei Scanner unter dem Winkel von jeweils 60° anzuordnen.

Die Ausrichtung der Abtastlinien 23 zu einer Seitenkante der vorzugsweise quaderförmigen Gegenstände 17 ist bevorzugt, doch sind grundsätzlich auch andere Richtungen der Abtastlinie 23, beispielsweise in Diagonalrichtung möglich. Werden zwei Abtastungen gleichzeitig angewendet, so sollen diese aber auf jeden Fall senkrecht aufeinander erfolgen.

## Patentansprüche

1. Verfahren zum Betreiben eines Barcodelesers für auf einem sich zumindest im wesentlichen in einer Richtung (26) bewegenden Gegenstand (17) angebrachte Codierungen (16) mit einem Scanner (12), der einen eine Abtastfläche (18, 19) des Gegenstandes (17) zeilenweise abfahrenden Abtastlichtstrahl (11) erzeugt, eine Lichtempfangsanordnung (13) aufweist, die eine Auswerte- und Steuerelektronik (14) umfaßt, mit der auf der Abtastfläche (18, 19) des Gegenstandes (17) angebrachte, vom Abtastlichtstrahl (11) abgetastete Barcodes (16) erkannt werden können, und welcher außerhalb der Bewegungsbahn (20) des Gegenstandes (17) angeordnet und auf die in Bewegungsrichtung gesehen vordere oder hintere Abtastfläche (18, 19) des Gegenstandes (17) gerichtet ist,
dadurch **gekennzeichnet,**
daß der Abtastlichtstrahl (11) vor Beginn der Abtastung bei sich auf dem Scanner (12) zu bewegenden Gegenstand (17) auf den dem Scanner (12) am nächsten liegenden Bereich (21) der Abtastfläche (18) und/oder bei von dem Scanner (12) weg bewegenden Gegenstand (17) auf den vom Scanner (12) am weitesten entfernten Bereich (22) der Abtastfläche (19) gerichtet ist, und daß der die zeilenweise Abtastung bewirkende Vorschub (25) der Abtastlinie (22) im wesentlichen senkrecht zur Abtastrichtung (24) mit der Bewegungsgeschwindigkeit des Gegenstandes (17) derart synchronisiert wird, daß der Abstand des Scanners (12) von der Abtastlinie (23) auf der Abtastfläche (18, 19) des Gegenstandes (17) zumindest im wesentlichen gleich bleibt.

2. Verfahren nach Anspruch 1,
dadurch **gekennzeichnet,**
daß die Abtastlinie (23) horizontal oder vertikal und ihr Vorschub (25) entsprechend vertikal bzw. horizontal verläuft.

3. Verfahren nach Anspruch 1 oder 2,
dadurch **gekennzeichnet,**
daß zwei Scanner (12) verwendet werden, deren Abtastlinien (23) zumindest im wesentlichen senkrecht aufeinander stehen.

4. Verfahren nach Anspruch 1 oder 2,
dadurch **gekennzeichnet,**
daß drei oder mehr Scanner (12) verwendet werden, deren Abtastlinien (23) zumindest im wesentlichen unter einem Winkel von 60° bzw. kleineren Winkeln verlaufen.

5. Barcodeleser für auf einem sich zumindest im wesentlichen in einer Richtung (26) bewegenden Gegenstand (17) angebrachte Codierungen (16) mit einem Scanner (12), der einen eine Abtastfläche (18, 19) des Gegenstandes (17) zeilenweise abfahrenden Abtastlichtstrahl (11) erzeugt, eine Lichtempfangsanordnung (13) aufweist, die eine Auswerte- und Steuerelektronik (14) umfaßt, mit der auf der Abtastfläche (18, 19) des Gegenstandes (17) angebrachte, vom Lichtstrahl (11) abgetastete Barcodes (16) erkannt werden können, und welcher außerhalb der Bewegungsbahn (20) des Gegenstandes (17) angeordnet und auf die in Bewegungsrichtung gesehen vordere oder hintere Abtastfläche (18, 19) des Gegenstandes (17) gerichtet ist, insbesondere zur Ausführung des Verfahrens nach einem der Ansprüche 1 bis 3
dadurch **gekennzeichnet,**
daß ein Empfangsmittel (27, 28) für den Ort der Abtastfläche (18, 19), an dem die Abtastung beginnen soll, und ein Eingabe- oder Detektionsmittel (29) für die Bewegungsgeschwindigkeit des Gegenstandes (17) vorgesehen und an die Auswerte- und Steuerelektronik (14) angeschlossen sind, und daß die Auswerte- und Steuerelektronik (14) ein Vorschubmittel (30, 31) für die Verschiebung der Abtastlinie (23) derart beaufschlagt, daß der Abstand des Scanners (12) von der Abtastlinie (23) auf der Abtastfläche (18, 19) des Gegenstandes (17) zumindest im wesentlichen gleich bleibt.

6. Vorrichtung nach Anspruch 5,
dadurch **gekennzeichnet,**
daß der Scanner (12) ein von einem Lichtstrahl (33) beaufschlagtes, die Abtastbewegung erzeugendes Lichtablenkmittel (32), insbesondere Spiegelrad (32) und ein den vom Lichtablenkmittel (32) reflektierten Lichtstrahl (34) erfassenden, den Vorschub (25) erzeugenden Lichtstrahlschwenkmittel, insbesondere Schwingspiegel (31) erfaßt, der das Licht auf die Abtastfläche (18, 19) richtet und die Abtastlinie (23) an der durch die Auswerte- und Steuerelektronik (14) bestimmten Stelle bildet.

## Claims

1. Method of operating a bar code reader for codes (16) applied to an article (17) which moves at least substantially in one direction (26) using a scanner (12) which generates a scanning light beam (11) which travels linewise along a scanned surface (18, 19) of the article (17), which has a light receiving arrangement (13) including an electronic evaluation and control circuit (14) with which bar codes (16) on the scanned surface (18, 19) of the article (17) and scanned by the scanning light beam (11) can be recognised, and which is arranged outside of the path of movement (20) of the article (17) and directed onto the front or rear scanned surface (18, 19) of the article (17) as seen in the direction of movement, characterised in that, with an article (17) moving towards the scanner (12), the scanning light beam (11) is directed before the start of the scanning, onto the region (21) of the scanned surface (18) lying closest to the scanner (12) and/or, with an article (17) moving away from the scanner (12), to the region (22) of the scanned surface (19) which is furthest removed from the scanner (12); and in that the advance (25) of the scanning line (22) substantially perpendicular to the scanning direction which brings about the linewise scanning is synchronised with the speed of movement of the article (17) in such a way that the spacing of the scanner (12) from the scanning line (23) on the scanned surface (18, 19) of the article (17) remains at least substantially constant.

2. Method in accordance with claim 1, characterised in that the scanning line (23) extends horizontally or vertically and its advance (25) correspondingly extends vertically or horizontally respectively.

3. Method in accordance with claim 1 or claim 2, characterised in that two scanners (12) are used, the scanning lines (23) of which stand at least substantially perpendicular to one another.

4. Method in accordance with claim 1 or claim 2, characterised in that three or more scanners (12) are used, the scanning lines (23) of which extend at least substantially at an angle of 60° or at smaller angles.

5. Bar code reader for codes (16) applied to an article (17) moving at least substantially in one direction (26), the reader comprising a scanner (12) which generates a scanning light beam (11) for linewise scanning of a scanned surface (18, 19) of the article (17), and which has a light receiving arrangement (13) including an electronic evaluation and control circuit (14) with which bar codes (16) scanned by the light beam (11) and applied to the scanned surface (18, 19) of the article (17) can be recognised, the scanner (12) being arranged outside of the path of movement (20) of the article (17) and the light beam being directed onto the front or rear scanned surface (18, 19) of the article (17) as seen in the direction of movement, in particular for carrying out the method of one of the claims 1 to 3, characterised in that a receiving means (27, 28) for the location of the scanned surface (18, 19) at which the scanning should start and an input or detection means (29) for the speed of movement of the article (17) are provided and are connected to the electronic evaluation and control circuit (14); and in that the electronic evaluation and control circuit (14) act on an advance means (30, 31) for the displacement of the scanning line (23) in such a way that the spacing of the scanner (12) from the scanning line (23) on the scanned surface (18, 19) of the article (17) remains at least substantially constant.

6. Apparatus in accordance with claim 5, characterised in that the scanner (12) includes a light deflecting means (32), in particular a mirror wheel (32), which is illuminated by a light beam (33) and generates the scanning movement, and a light beam pivoting means, in particular an oscillating mirror (31), which picks up the light beam reflected by the light deflecting means (32) and generates the advance (25), with the light beam pivoting means directing the light onto the scanned surface (18, 19) and forming the scanning line (23) at the location determined by the electronic evaluation and control circuit (14).

## Revendications

1. Procédé d'utilisation d'un lecteur de codes à barres pour la détection des codages (16) appliqués sur un objet (17) se déplaçant au moins sensiblement dans une direction (26), à l'aide d'un dispositif à balayage (12) qui produit un faisceau lumineux explorateur (11) parcourant ligne par ligne une zone analysée (18, 19) de l'objet (17), et qui présente un agencement récepteur de lumière (13), comportant une électronique d'évaluation et de commande (14), au moyen de laquelle peut être reconnu le code à barres (16) appliqué sur la zone analysée (18, 19) de l'objet (17) et exploré par le faisceau lumineux explorateur (11), le dispositif à balayage étant disposé en dehors du chemin de déplacement (20) de l'objet (17) et étant dirigé vers la zone analysée (18, 19), située sur l'avant ou sur l'arrière de l'objet (17) dans le sens du déplacement,
caractérisé en ce que
le faisceau lumineux explorateur (11) est orienté, avant le début du balayage, lorsque l'objet (17) est prévu pour un déplacement en direction du dispositif à balayage (12), sur la partie (21) de la zone analysée (18) située le plus près du dispositif à balayage (12) et/ou, lorsque l'objet (17) s'éloigne du dispositif à balayage (12), le faisceau est orienté sur la partie (22) de la zone analysée (19) située le plus loin du dispositif à balayage (12), et en ce que l'avance (25) de la ligne de balayage (22), servant à l'exploration ligne par ligne, et s'effectuant sensiblement perpendiculairement au sens d'exploration (24), est synchronisée avec la vitesse de déplacement de l'objet (17) de telle manière que la distance entre le dispositif à balayage (12) et la ligne de balayage (23) sur la zone analysée (18, 19) de l'objet (17) demeure, du moins sensiblement, constante.

2. Procédé selon la revendication 1,
caractérisé en ce que
la ligne de balayage (23) s'étend horizontalement ou verticalement et en ce que son avance (25) est, en conséquence, verticale ou bien horizontale.

3. Procédé selon la revendication 1 ou 2,
caractérisé en ce que
deux dispositifs à balayage (12) sont utilisés, leurs lignes de balayage (23) étant, au moins sensiblement, perpendiculaires l'une à l'autre.

4. Procédé selon la revendication 1 ou 2,
caractérisé en ce que
trois dispositifs à balayage (12) ou davantage sont utilisés, leurs lignes de balayage (23) s'étendant en formant respectivement entre elles, au moins sensiblement un angle de 60° ou des angles plus petits.

5. Lecteur de codes à barres pour la détection des codages (16) appliqués sur un objet (17) se déplaçant au moins sensiblement dans une direction (26), et comprenant un dispositif à balayage (12) qui produit un faisceau lumineux explorateur (11) parcourant ligne par ligne une zone analysée (18, 19) de l'objet (17), et qui présente un agencement récepteur de lumière (13), comportant une électronique d'évaluation et de commande (14), au moyen de laquelle peut être reconnu le code à barres (16) appliqué sur la zone analysée (18, 19) de l'objet (17) et exploré par le faisceau lumineux (11), le dispositif à balayage étant disposé en dehors du chemin de déplacement (20) de l'objet (17) et étant dirigé vers la zone analysée (18, 19), située sur l'avant ou sur l'arrière de l'objet (17) dans le sens du déplacement, notamment pour la mise en oeuvre du procédé selon l'une des revendications 1 à 3,
caractérisé en ce que
sont prévus un moyen récepteur (27, 28) pour l'emplacement de la zone analysée (18, 19), au niveau duquel doit commencer l'exploration, et un moyen d'entrée ou de détection (29) pour la vitesse de déplacement de l'objet (17), qui sont reliés à l'électronique d'évaluation et de commande (14), et en ce que l'électronique d'évaluation et de commande (14) agit sur un moyen d'avance (30, 31) pour le déplacement de la ligne de balayage (23) de telle manière que la distance entre le dispositif à balayage (12) et la ligne de balayage (23) sur la zone analysée (18, 19) de l'objet (17) demeure, du moins sensiblement, constante.

6. Dispositif selon la revendication 5,
caractérisé en ce que
le dispositif à balayage (12) comprend un moyen de déflexion de lumière (32), notamment un élément rotatif à miroirs (32), recevant un faisceau lumineux (33) et produisant le mouvement de balayage, et un moyen de pivotement du faisceau, notamment un miroir oscillant (31), recevant le faisceau lumineux (34) réfléchi par le moyen de déflexion de lumière (32) et produisant l'avance (25), et qui dirige la lumière vers la surface analysée (18, 19) et forme la ligne de balayage (23) à l'emplacement déterminé par l'électronique d'évaluation et de commande (14).
